# EUROPEAN PATENT APPLICATION

(11) **EP 4 614 043 A1**
(43) Date of publication of application: **10.09.2025**
(21) Application number: 23885420.2
(22) Date of filing: 02.10.2023
(51) Int. Cl.: F16K 31/04, F16K 11/074

(54) **SWITCHING VALVE**

(30) Priority: 31.10.2022 JP 2022174043
(71) Applicant: Eagle Industry Co., Ltd., Minato-ku Tokyo 105-8587 (JP)
(72) Inventor: MATSUZAKI, Akitaka, Tokyo 105-8587 (JP); KAWATO, Tadanobu, Tokyo 105-8587 (JP); NISHIMURA, Naoki, Tokyo 105-8587 (JP); URAKAWA, Ryota, Tokyo 105-8587 (JP); TANIKAWA, Hironori, Tokyo 105-8587 (JP); OGAWA, Noriyuki, Tokyo 105-8587 (JP)
(74) Representative: WSL Patentanwälte Partnerschaft mbB
(86) International application number: PCT/JP2023/035874
(87) International publication number: WO 2024/095657

(57) **Abstract**

A switching valve capable of rotating a rotor without being influenced by a pressure in a rear space is provided. A rotor 60 is provided with discharge means 60c for discharging a fluid present in a valve chamber T to the outside of the valve chamber S between rotation positions.

## Description

### {TECHNICAL FIELD}

The present invention relates to a switching valve, for example, a switching valve that switches a flow path through which a fluid flows.

### {BACKGROUND ART}

In various industrial fields, a fluid circuit is used in which a fluid supply source and a fluid load such as a fluid operating device or a heat exchanger are connected by a flow path. In such a fluid circuit, a switching valve is provided to switch the flow path of the working fluid and hence a single fluid circuit realizes a plurality of modes for operating the fluid load.

For example, a switching valve of Patent Citation 1 includes a valve casing having upper and lower valve covers, upper and lower disks provided inside the valve casing, and a spring disposed between the upper and lower disks. The upper valve cover is provided with first to third ports, and the lower valve cover is provided with fourth and fifth ports. These upper and lower disks are adapted to rotate integrally. Further, the upper and lower disks are provided with a plurality of through-holes and grooves.

The upper and lower disks have three rotation positions allowing the switching valve to be switched between an A mode, a B mode, and a C mode. In the A mode rotation position, the high-pressure fluid supplied from the fourth port flows out to the second port, and the fluid supplied from the third port flows out to the fifth port. In the B mode rotation position, the high-pressure fluid supplied from the fourth port flows out to the first port, and the fluid supplied from the third port flows out to the fifth port. In the C mode rotation position, the high-pressure fluid supplied from the fourth port flows out to the fifth port, and the fluid supplied from the third port flows out to the second port.

Further, since the upper and lower disks are pressed against the upper and lower valve covers by the biasing force of the spring and the fluid pressure between the upper and lower disks at each rotation position of the upper and lower disks, a seal can be provided between the upper disk and the upper valve cover and between the lower disk and the lower valve cover.

### {CITATION LIST}

### {Patent Literature}

Patent Citation 1: JP H7-260022 A (Page 4, FIG. 4)

### {SUMMARY OF INVENTION}

### {Technical Problem}

However, in the switching valve of Patent Citation 1, since the communication opening area between the inflow port and the outflow port gradually becomes smaller when moving from one rotation position to the other rotation position, for example, from the A mode rotation position to the B mode rotation position, the pressure between both disks gradually increases. As a result, there is a risk that wear occurs due to an increase in friction between the upper disk and the upper valve cover and between the lower disk and the lower valve cover.

The present invention has been made in view of such problems and an object of the present invention is to provide a switching valve capable of rotating a rotor without being influenced by a pressure in a rear space.

### {Solution to Problem}

In order to solve the foregoing problem, a switching valve according to a first aspect of the present invention is a switching valve including: a housing; and a rotor which is disposed in a valve chamber formed inside the housing and rotates relative to the housing, wherein the housing is provided with at least one inlet port which communicates with the valve chamber and introduces a fluid into the valve chamber and at least two outlet ports which communicate with the valve chamber and derive the fluid from the valve chamber, wherein the rotor has a contact surface which contacts a seat surface of the housing and has at least one communication port which connects the inlet port and the outlet ports, the rotor rotates to take a plurality of rotation positions and a flow path is switched by combining the inlet port, the outlet ports and the communication port at each rotation position, and the rotor is provided with discharge means for discharging a fluid in the valve chamber to outside of the valve chamber between the rotation positions. According to the aforesaid feature of fist aspect of the present invention, since the fluid in the valve chamber can be discharged to the outside of the valve chamber by the discharge means when the rotor rotates from one rotation position toward the other rotation position, the rotor can be rotated without being influenced by the pressure in the valve chamber.

It may be preferable that the discharge means communicates with the outlet port. According to this preferable configuration, since the fluid of the valve chamber can be discharged using the outlet port, the structure of the switching valve can be simplified.

It may be preferable that the discharge means is a notched groove which allows an outer diameter side of the rotor to communicate with a seat surface side. According to this preferable configuration, the discharge means can be configured simply.

It may be preferable that the housing is provided with a notched groove which extends radially outward from the outlet port and communicates with the notched groove of the rotor. According to this preferable configuration, since the discharge means communicates with the outlet port through the notched groove provided to protrude toward the outside of the outlet port, the discharge means can be configured simply. Further, the discharge means can be prevented from communicating with the inlet port.

It may be preferable that the housing is provided with a communication hole which extends radially outward from the outlet port and communicates with the notched groove of the rotor. According to this preferable configuration, since the discharge means communicates with the outlet port through the communication hole extending outward from the outlet port, the discharge means can be prevented from communicating with the inlet port.

It may be preferable that the discharge means is a through-hole which penetrates the rotor in an axial direction. According to this preferable configuration, the discharge means can be configured simply.

It may be preferable that the discharge means does not communicate with the outlet port at each rotation position of the rotor. According to this preferable configuration, the original function of the switching valve is not influenced when the rotor moves between the rotation positions.

It may be preferable that a pair of the rotors are arranged in the valve chamber to rotate integrally, and at least one of the rotors is provided with the discharge means. According to this preferable configuration, the pressure in the valve chamber can be controlled by the discharge means of the rotor.

In order to solve the foregoing problem, a switching valve according to a second aspect of the present invention is a switching valve, comprising: a housing; and a rotor which is disposed in a valve chamber formed inside the housing and rotates relative to the housing, wherein the housing is provided with at least one inlet port which communicates with the valve chamber and introduces a fluid into the valve chamber and at least two outlet ports which communicate with the valve chamber and derive the fluid from the valve chamber, wherein the rotor has a contact surface which contacts a seat surface of the housing and has at least one communication port which connects the inlet port and the outlet ports, the rotor rotates to take a plurality of rotation positions and a flow path is switched by combining the inlet port, the outlet ports and the communication port at each rotation position, and the housing is provided with discharge means for discharging a fluid in the valve chamber to outside of the valve chamber between the rotation positions. According to the feature of the second aspect of the present invention, since the fluid in the valve chamber can be discharged to the outside of the valve chamber by the discharge means when the rotor rotates from one rotation position toward the other rotation position, the rotor can be rotated without being influenced by the pressure in the valve chamber.

### {BRIEF DESCRIPTION OF DRAWINGS}

FIG. 1 is a perspective view illustrating a switching valve according to a first embodiment of the present invention.
FIG. 2 is a vertical cross-sectional view of the switching valve in the first embodiment.
FIG. 3 is a top view of a casing in the first embodiment.
FIG. 4 is a top view of a stator in the first embodiment.
FIG. 5A is a top view of an upper rotor and FIG. 5B is a bottom view of the upper rotor in the first embodiment.
FIG. 6A is a top view of a lower rotor and FIG. 6B is a bottom view of the lower rotor in the first embodiment.
FIG. 7A is a schematic view illustrating a first flow path pattern of the switching valve and FIG. 7B is a schematic view illustrating a first rotation position of an upper rotor and a lower rotor in the first embodiment.
FIG. 8A is a schematic view illustrating a second flow path pattern of the switching valve and FIG. 8B is a schematic view illustrating the second rotation position of the upper rotor and the lower rotor in the first embodiment.
FIG. 9A is a schematic view illustrating a third flow path pattern of the switching valve and FIG. 9B is a schematic view illustrating a third rotation position of the upper rotor and the lower rotor in the first embodiment.
FIG. 10A is a schematic view illustrating a fourth flow path pattern of the switching valve and FIG. 10B is a schematic view illustrating a fourth rotation position of the upper rotor and the lower rotor in the first embodiment.
FIG. 11A is a schematic view illustrating a midway position when the upper rotor and the lower rotor are rotating from the first rotation position to a second rotation position when viewed from above and FIG. 11B is a cross-sectional view taken along a line A-A of FIG. 11A in the first embodiment.
FIG. 12A is a schematic view illustrating a midway position when an upper rotor and a lower rotor of a switching valve according to a second embodiment of the present invention are rotating from a first rotation position to a second rotation position when viewed from above and FIG. 12B is a cross-sectional view taken along a line B-B of FIG. 12A.
FIG. 13 is a schematic view illustrating a midway position when an upper rotor and a lower rotor of a switching valve according to a third embodiment of the present invention are rotating from a first rotation position to a second rotation position when viewed from above.
FIG. 14 is a schematic cross-sectional view illustrating a state in which discharge means and an outlet port communicate with each other in a switching valve according to a fourth embodiment of the present invention.
FIG. 15 is a schematic cross-sectional view illustrating a state in which discharge means and an outlet port communicate with each other in a switching valve according to a fifth embodiment of the present invention.
FIG. 16 is a longitudinal cross-sectional view of a switching valve according to a sixth embodiment of the present invention.
FIG. 17 is a longitudinal cross-sectional view of a switching valve according to a seventh embodiment of the present invention.
FIG. 18A is a schematic view illustrating a first rotation position of a rotor of a switching valve according to an eighth embodiment of the present invention and FIG. 18B is a schematic view illustrating a midway position when the rotor is rotating from the first rotation position to a second rotation position.
FIG. 19A is a schematic view illustrating a first rotation position of a rotor of a switching valve according to a ninth embodiment of the present invention and FIG. 19B is a schematic view illustrating a midway position when the rotor is rotating from the first rotation position to a second rotation position.

### {DESCRIPTION OF EMBODIMENTS}

Modes for carrying out a switching valve according to the present invention will be described below based on embodiments.

### {First embodiment}

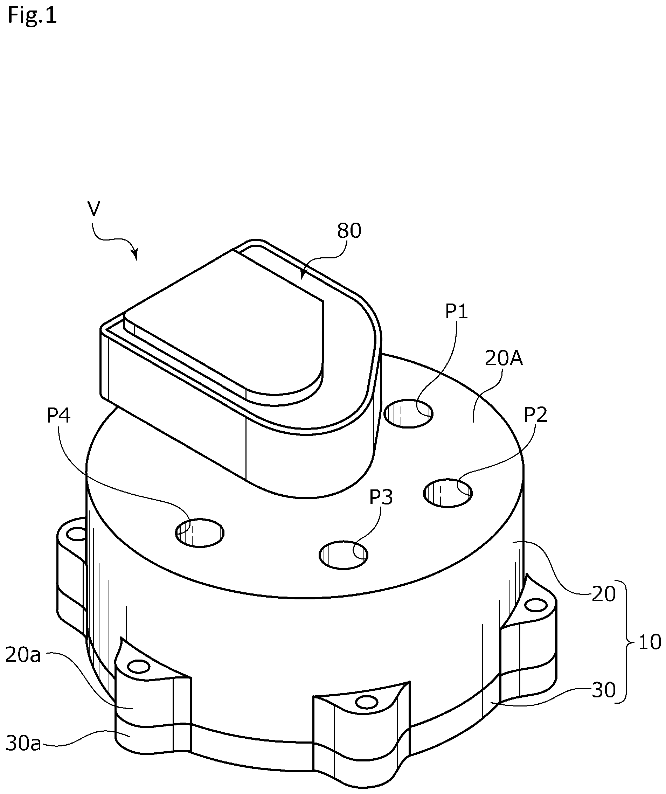

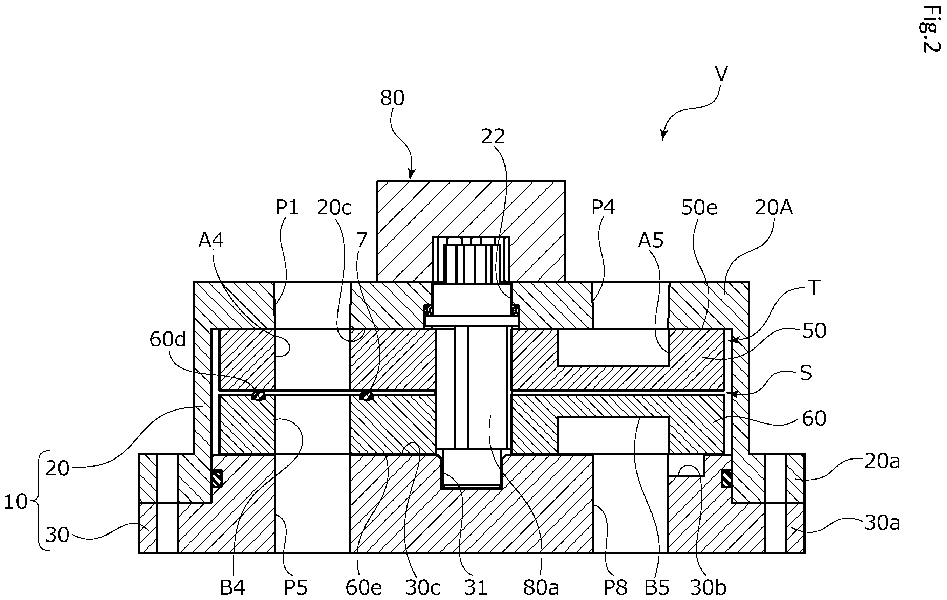

A switching valve according to a first embodiment will be described with reference to FIGS. 1 to 11. Hereinafter, the top and bottom of FIG. 2 will be described as the top and bottom of the switching valve. Specifically, the upper side of the drawing where the motor is disposed is the upper side of the switching valve, and the opposite side, that is, the lower side of the drawing, is the lower side of the switching valve.

As illustrated in FIG. 1, a switching valve V of the present invention is used to select one of a plurality of modes of a fluid circuit and to switch a flow path through which a working fluid flows. The switching valve V in this embodiment is an electric motor type rotary valve.

As illustrated in FIGS. 1 and 2, the switching valve V mainly includes a housing 10 as a fixed member, an upper rotor 50, a lower rotor 60, and a drive unit 80.

The housing 10 includes a cylindrical casing 20 with a bottom that opens downward and a columnar stator 30. The casing 20 and the stator 30 are made of a metal material or a resin material. The space between the casing 20 and the stator 30 forms a valve chamber T in which the upper rotor 50 and the lower rotor 60, which will be described below, are arranged.

The casing 20 has a plurality of flange portions 20a provided at the lower end of the outer circumferential surface thereof so that the flange portions protrude radially outward to be spaced apart in the circumferential direction. The stator 30 has a plurality of flange portions 30a provided on the outer circumferential surface thereof so that the flange portions protrude radially outward to be spaced apart in the circumferential direction. The casing 20 and the stator 30 are connected and fixed by fastening the flange portion 20a and the flange portion 30a with bolts (not illustrated).

As illustrated in FIGS. 1 to 3, a bottom portion 20A of the casing 20 is provided with a first port P1, a second port P2, a third port P3, a fourth port P4, and an insertion hole 22 which penetrate in the vertical direction.

The insertion hole 22 is provided in the center of the bottom portion 20A, and is adapted to receive a rotating shaft 80a therethrough as described below.

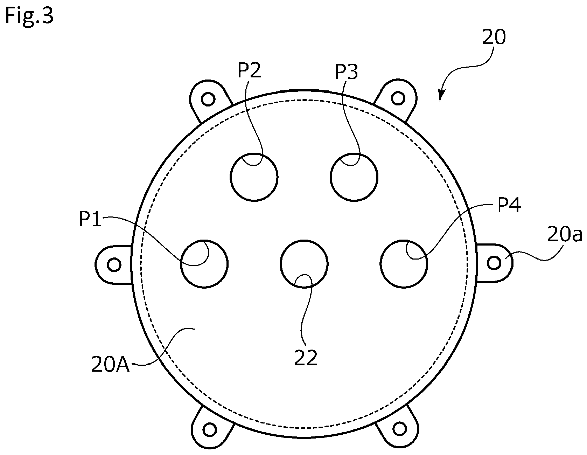

Further, the first port P1, the second port P2, the third port P3, and the fourth port P4 are provided at the same circumference positions on the outer diameter side of the insertion hole 22 to be spaced apart in the circumferential direction. Specifically, as illustrated in FIG. 3, the first port P1 is provided at the 9 o'clock position of the bottom portion 20A when viewed from above. The second port P2 is provided at the 11 o'clock position of the bottom portion 20A when viewed from above. The third port P3 is provided at the 1 o'clock position of the bottom portion 20A when viewed from above. The fourth port P4 is provided at the 3 o'clock position of the bottom portion 20A when viewed from above.

The first port P1 and the third port P3 function as outlet ports that derive the working fluid in the switching valve V to an external fluid load (not illustrated).

The second port P2 and the fourth port P4 function as inlet ports for introducing the working fluid discharged from the external fluid load (not illustrated) into the switching valve V.

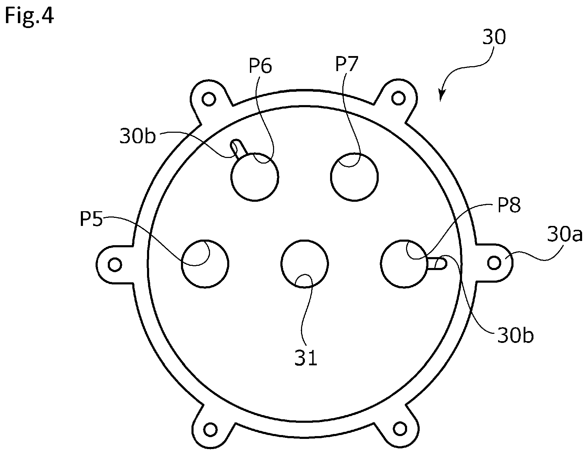

As illustrated in FIGS. 2 and 4, the stator 30 is provided with a fifth port P5, a sixth port P6, a seventh port P7, an eighth port P8, and a recess 31 that penetrate the stator in the vertical direction.

The recess 31 is provided in the center of the stator 30, and the lower end of the rotating shaft 80a is loosely inserted into the recess to be rotatable therein as described below.

The fifth port P5, the sixth port P6, the seventh port P7, and the eighth port P8 are provided at the same circumference positions on the outer diameter side of the recess 31 to be spaced apart in the circumferential direction. Specifically, as illustrated in FIG. 4, the fifth port P5 is located at the 9 o'clock position of the stator 30 when viewed from above. The sixth port P6 is located at the 11 o'clock position of the stator 30 when viewed from above. The seventh port P7 is located at the 1 o'clock position of the stator 30 when viewed from above. The eighth port P8 is located at the 3 o'clock position of the stator 30 when viewed from above.

The fifth port P5 and the seventh port P7 function as inlet ports for introducing the working fluid discharged from the external fluid load (not illustrated) into the switching valve V.

The sixth port P6 and the eighth port P8 are respectively connected to a fluid load (not illustrated). The sixth port P6 and the eighth port P8 function as outlet ports that derive the working fluid in the switching valve V to the external fluid load (not illustrated).

Further, the stator 30 is provided with a notched groove 30b that extends from the sixth port P6 and the eighth port P8 which are outlet ports to the outer diameter side. The notched groove 30b communicates with the sixth port P6 and the eighth port P8 and opens upward.

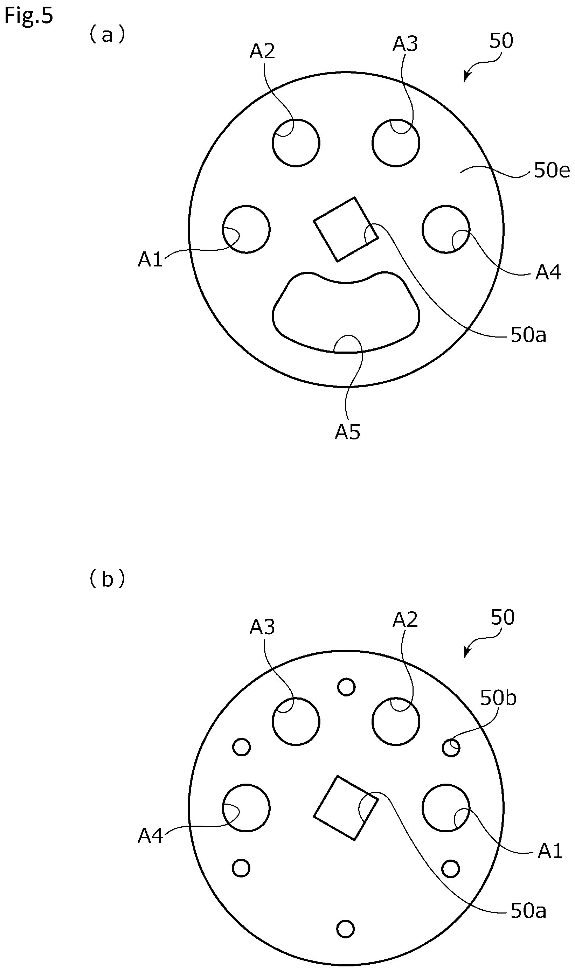

As illustrated in FIG. 5, the upper rotor 50 is formed in a disk shape. The upper rotor 50 is provided with communication ports A1, A2, A3, and A4, a communication groove A5, a through-hole 50a, and a downward recess 50b.

The through-hole 50a has a rectangular shape when viewed from above and is provided in the center of the upper rotor 50.

The communication ports A1, A2, A3, and A4 are through-holes. The communication ports A1, A2, A3, and A4 are provided at the same circumference positions on the outer diameter side of the through-hole 50a to be spaced apart in the circumferential direction. Specifically, the communication port A1 is provided at the 9 o'clock position of the upper rotor 50 when viewed from above. The communication port A2 is provided at the 11 o'clock position of the upper rotor 50 when viewed from above. The communication port A3 is provided at the 1 o'clock position of the upper rotor 50 when viewed from above. The communication port A4 is provided at the 3 o'clock position of the upper rotor 50 when viewed from above.

The communication groove A5 is a concave groove that is provided on an upper surface 50e of the upper rotor 50 and opens upward. This communication groove A5 generally has a fan shape and extends in an arc shape when viewed from above. The communication groove A5 is provided across the 5 o'clock to 7 o'clock positions of the upper rotor 50 when viewed from above.

The downward recesses 50b are arranged at a plurality of positions, that is, six positions of the lower surface of the upper rotor 50 at equal intervals to be spaced apart in the circumferential direction. The downward recesses 50b are offset from the communication ports A1 to A4 in the circumferential direction and are arranged slightly radially outward from the communication ports A1 to A4.

The upper surface 50e of the upper rotor 50 is a contact surface that contacts a lower surface 20c serving as a seat surface of the bottom portion 20A of the casing 20 (see FIG. 2).

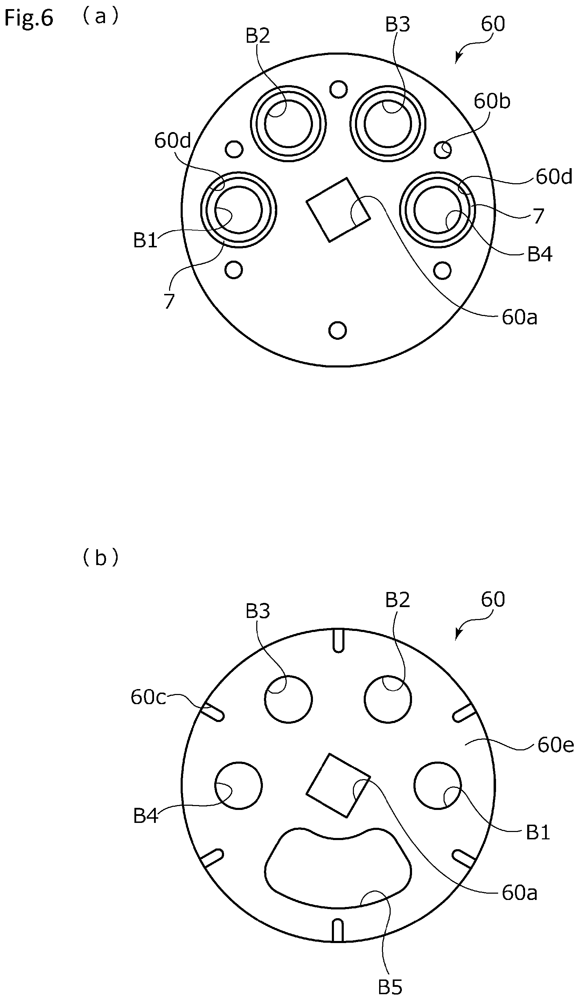

As illustrated in FIG. 6, the lower rotor 60 is formed in a disk shape. The lower rotor 60 is provided with communication ports B1, B2, B3, and B4, a communication groove B5, a through-hole 60a, an upward recess 60b, a notched groove 60c as discharge means, and an annular groove 60d.

The through-hole 60a has a rectangular shape when viewed from above and is provided in the center of the lower rotor 60.

The communication ports B1, B2, B3, and B4 are through-holes. The communication ports B1, B2, B3, and B4 are provided at the same circumference positions on the outer diameter side of the through-hole 60a to be spaced apart in the circumferential direction. Specifically, the communication port B1 is provided at the 9 o'clock position of the lower rotor 60 when viewed from above. The communication port B2 is provided at the 11 o'clock position of the lower rotor 60 when viewed from above. The communication port B3 is provided at the 1 o'clock position of the lower rotor 60 when viewed from above. The communication port B4 is provided at the 3 o'clock position of the lower rotor 60 when viewed from above.

The communication groove B5 is a concave groove that is provided on a lower surface 60e of the lower rotor 60 and opens downward. This communication groove B5 generally has a fan shape and extends in an arc shape when viewed from below. The communication groove B5 is provided across the 5 o'clock to 7 o'clock positions of the lower rotor 60 when viewed from below.

The upward recesses 60b are arranged at a plurality of positions, that is, six positions of the upper surface of the lower rotor 60 at equal intervals to be spaced apart in the circumferential direction. The upward recesses 60b are offset from the communication ports B1 to B4 in the circumferential direction and are arranged slightly radially outward from the communication ports B1 to B4.

The notched grooves 60c are arranged at a plurality of positions, that is, six positions of the lower surface 60e of the lower rotor 60 at equal intervals to be spaced apart in the circumferential direction. The notched grooves 60c are offset from the communication ports B1 to B4 in the circumferential direction. The notched grooves 60c extend radially inward from the outer diameter edge of the lower rotor 60 and open radially outward and downward.

The annular groove 60d is formed on the upper surface of the lower rotor 60 to surround the communication ports B1 to B4. The upper surface of the lower rotor 60 is present between each annular groove 60d and the communication ports B1 to B4.

The lower surface 60e of the lower rotor 60 is a contact surface that contacts an upper surface 30c serving as a seat surface of the stator 30.

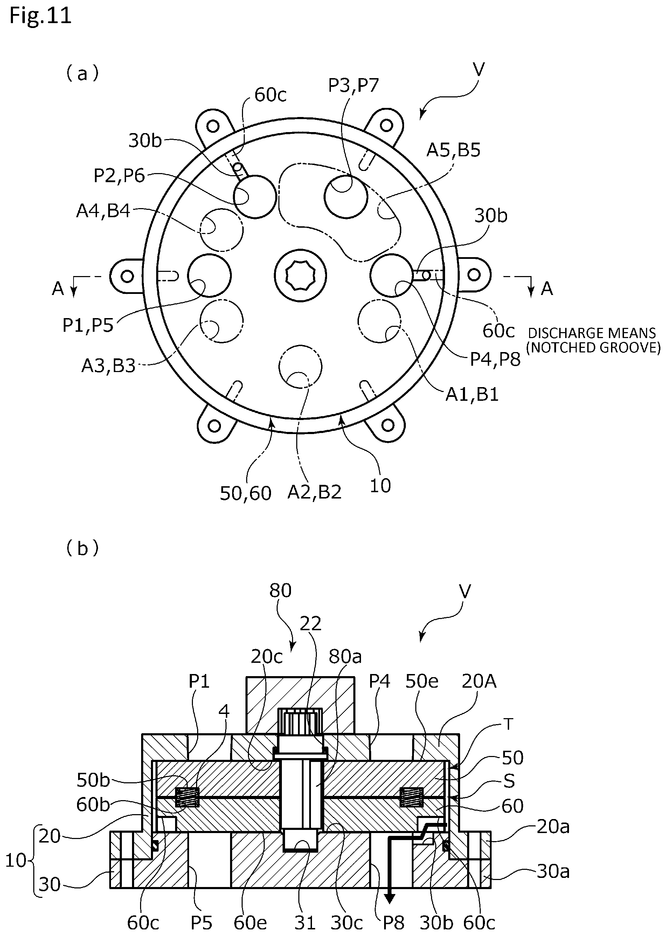

As illustrated in FIG. 11B, a spring 4 is disposed between each downward recess 50b of the upper rotor 50 and each upward recess 60b of the lower rotor 60. Accordingly, the upper surface 50e of the upper rotor 50 is pressed against the lower surface 20c of the bottom portion 20A of the casing 20, and the lower surface 60e of the lower rotor 60 is pressed against the upper surface 30c of the stator 30.

Further, returning to FIG. 2, the upper rotor 50 and the lower rotor 60 have a rectangular cross-sectional portion of the rotating shaft 80a inserted through the through-holes 50a and 60a with the communication ports A1 to A4 and the communication ports B1 to B4 corresponding to each other vertically. The tip of the rotating shaft 80a has a circular cross section and is rotatably inserted into the recess 31 of the stator 30 that is circular when viewed from above. Thus, the upper rotor 50 and the lower rotor 60 are adapted to rotate integrally by the rotating shaft 80a.

Further, an O-ring 7 is disposed in each annular groove 60d of the lower rotor 60. The O-ring 7 provides a seal between the upper rotor 50 and the lower rotor 60. Thus, the communication ports A1 to A4 and the communication ports B1 to B4 communicate with each other in a sealed state.

Further, the space between the upper rotor 50 and the lower rotor 60 excluding the space within the O-ring 7 is a rear space S on the rear side of the upper surface 50e of the upper rotor 50 and the lower surface 60e of the lower rotor 60.

As illustrated in FIG. 2, the drive unit 80 is fixed to the housing 10 in a sealed state and drives the upper rotor 50 and the lower rotor 60 to rotate. Specifically, the drive unit 80 includes a casing that houses a plurality of gears, the rotating shaft 80a that meshes with the gears, and a motor that drives them.

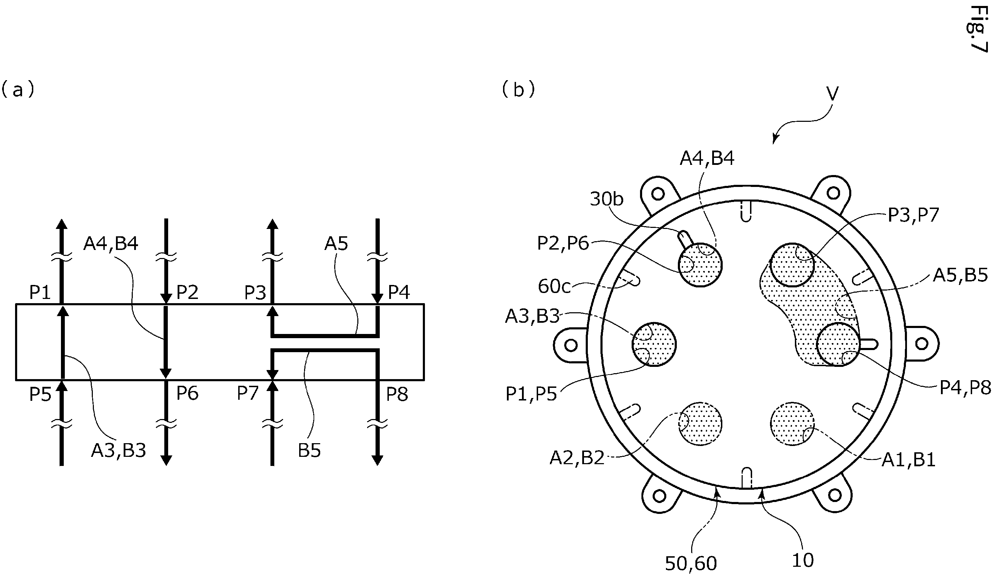

Next, a first rotation position, a second rotation position, a third rotation position, and a fourth rotation position of the upper rotor 50 and the lower rotor 60 will be described with reference to FIGS. 7 to 10. For ease of description, the casing 20 and the stator 30 are indicated by solid lines, and the upper rotor 50 and the lower rotor 60 are indicated by two-dot chain lines. Furthermore, the communication ports A1 to A4, the communication ports B1 to B4, the communication groove A5, and the communication groove B5 of the upper rotor 50 and the lower rotor 60 are indicated by dots.

FIG. 7A illustrates a first flow path pattern of the switching valve V. Further, FIG. 7B illustrates a first rotation position of the upper rotor 50 and the lower rotor 60 which form the first flow path pattern of the switching valve V. In the first flow path pattern of the switching valve V, the fluid circuit in which the switching valve V is used is operated in a first mode.

Specifically, in the first flow path pattern of the switching valve V, the second port P2 communicates with the sixth port P6 through the communication ports A4 and B4. The fourth port P4 communicates with the third port P3 through the communication groove A5. The fifth port P5 communicates with the first port P1 through the communication ports A3 and B3. The seventh port P7 communicates with the eighth port P8 through the communication groove B5.

Furthermore, the communication ports A1, A2, B1, and B2 are closed by the casing 20 and the stator 30. Further, each notched groove 60c of the lower rotor 60 does not communicate with the notched groove 30b of the stator 30.

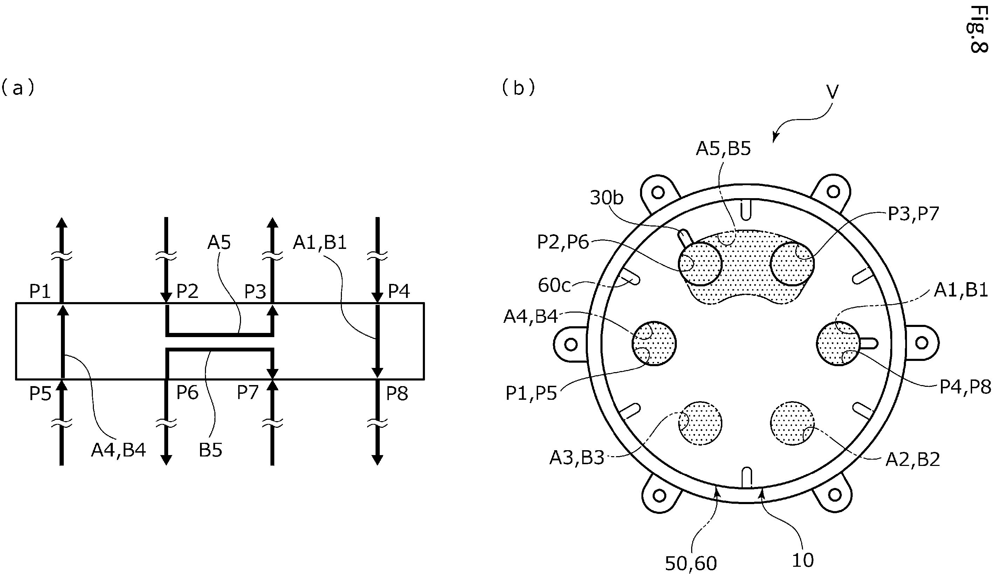

FIG. 8A illustrates a second flow path pattern of the switching valve V. Further, FIG. 8B illustrates a second rotation position of the upper rotor 50 and the lower rotor 60 which form the second flow path pattern of the switching valve V. In the second flow path pattern of the switching valve V, the fluid circuit is operated in a second mode.

Specifically, in the second flow path pattern of the switching valve V, the second port P2 communicates with the third port P3 through the communication groove A5. The fourth port P4 communicates with the eighth port P8 through the communication ports A1 and B1. The fifth port P5 communicates with the first port P1 through the communication ports A4 and B4. The seventh port P7 communicates with the sixth port P6 through the communication groove B5.

Furthermore, the communication ports A2, A3, B2, and B3 are closed by the casing 20 and the stator 30. Further, each notched groove 60c of the lower rotor 60 does not communicate with the notched groove 30b of the stator 30.

Further, the second rotation position of the upper rotor 50 and the lower rotor 60 is a position rotated approximately 60° counterclockwise from the first rotation position of the upper rotor 50 and the lower rotor 60 when viewed from above.

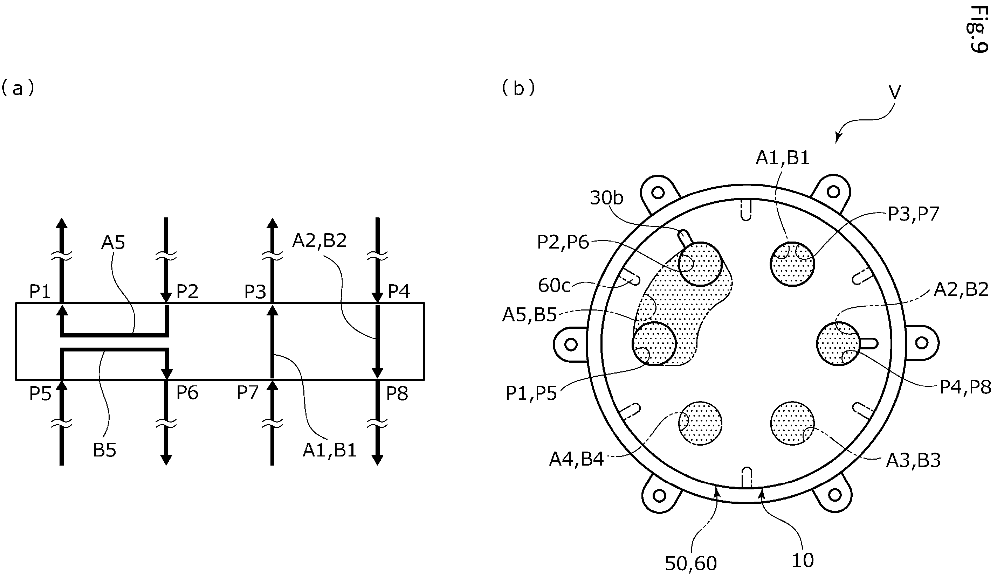

FIG. 9A illustrates a third flow path pattern of the switching valve V. Further, FIG. 9B illustrates a third rotation position of the upper rotor 50 and the lower rotor 60 which form the third flow path pattern of the switching valve V. In the third flow path pattern of the switching valve V, the fluid circuit is operated in a third mode.

Specifically, in the third flow path pattern of the switching valve V, the second port P2 communicates with the first port P1 through the communication groove A5. The fourth port P4 communicates with the eighth port P8 through the communication ports A2 and B2. The fifth port P5 communicates with the sixth port P6 through the communication groove B5. The seventh port P7 communicates with the third port P3 through the communication ports A1 and B1.

Furthermore, the communication ports A3, A4, B3, and B4 are closed by the casing 20 and the stator 30. Further, each notched groove 60c of the lower rotor 60 does not communicate with the notched groove 30b of the stator 30.

Further, the third rotation position of the upper rotor 50 and the lower rotor 60 is a position rotated approximately 60° counterclockwise from the second rotation position of the upper rotor 50 and the lower rotor 60 when viewed from above.

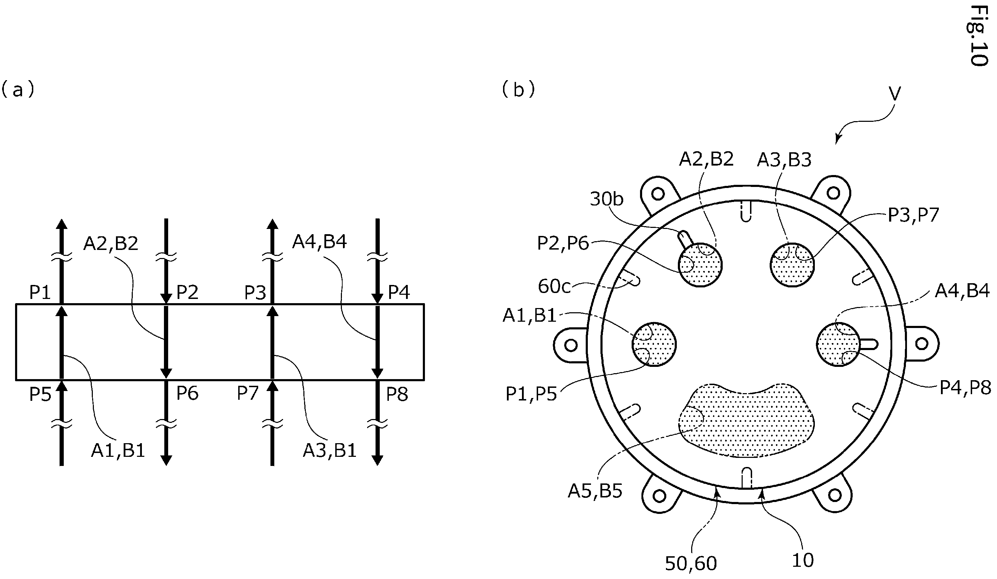

FIG. 10A illustrates a fourth flow path pattern of the switching valve V. Further, FIG. 10B illustrates a fourth rotation position of the upper rotor 50 and the lower rotor 60 which form the fourth flow path pattern of the switching valve V. In the fourth flow path pattern of the switching valve V, the fluid circuit is operated in a fourth mode.

Specifically, in the fourth flow path pattern of the switching valve V, the second port P2 communicates with the sixth port P6 through the communication ports A2 and B2. The fourth port P4 communicates with the eighth port P8 through the communication ports A4 and B4. The fifth port P5 communicates with the first port P1 through the communication ports A1 and B1. The seventh port P7 communicates with the third port P3 through the communication ports A3 and B3.

Furthermore, the communication grooves A5 and B5 are closed by the casing 20 and the stator 30. Further, each notched groove 60c of the lower rotor 60 does not communicate with the notched groove 30b of the stator 30.

Further, the fourth rotation position of the upper rotor 50 and the lower rotor 60 is a position rotated approximately 120° counterclockwise from the third rotation position of the upper rotor 50 and the lower rotor 60 when viewed from above.

In this way, the upper rotor 50 and the lower rotor 60 are adapted to rotate between the first rotation position and the fourth rotation position, that is, within a range of approximately 240°.

Further, the notched groove 60c of the lower rotor 60 and the notched groove 30b of the stator 30 do not communicate with each other at each rotation position of the upper rotor 50 and the lower rotor 60.

In such a switching valve V, the upper surface 50e of the upper rotor 50 may momentarily move in a direction away from the lower surface 20c of the bottom portion 20A of the casing 20 or the lower surface 60e of the lower rotor 60 may momentarily move in a direction away from the upper surface 30c of the stator 30 against the biasing force of the spring 4 due to vibration or the like.

In such a case, the working fluid flows from the second port P2, the fourth port P4, the fifth port P5, and the seventh port P7 which are the inlet ports into the rear space S through the space in the housing 10. Accordingly, since the pressure in the rear space S is applied to the upper rotor 50 and the lower rotor 60 in addition to the biasing force of the spring 4, the friction between the upper surface 50e of the upper rotor 50 and the lower surface 20c of the bottom portion 20A of the casing 20 and the friction between the lower surface 60e of the lower rotor 60 and the upper surface 30c of the stator 30 increase. As a result, there is a risk that wear occurs when the upper rotor 50 and the lower rotor 60 rotate between their rotation positions.

In the switching valve V of the first embodiment, the pressure in the rear space S is reduced during the rotation of the upper rotor 50 and the lower rotor 60 from one rotation position to the other rotation position. Here, the first rotation position, the second rotation position, the third rotation position, and the fourth rotation position described below are a plurality of rotation positions in the present invention.

Next, a case of reducing the pressure in the rear space S will be described with reference to FIG. 11. Here, a case in which the upper rotor 50 and the lower rotor 60 rotate from the first rotation position to the second rotation position will be described.

As illustrated in FIG. 11, this illustrates a midway position when the upper rotor 50 and the lower rotor 60 rotate from the first rotation position to the second rotation position, specifically, the upper rotor 50 and the lower rotor 60 are rotated approximately 30° counterclockwise from the first rotation position when viewed from above.

As illustrated in FIGS. 11A and 11B, when the upper rotor 50 and the lower rotor 60 are located at a position rotated approximately 30° counterclockwise from the first rotation position, the notched groove 60c of the lower rotor 60 and the notched groove 30b of the stator 30 overlap each other in the circumferential direction and communicate with each other.

Since two notched grooves 30b communicate with the sixth port P6 and the eighth port P8 as the discharge ports to form a part of the discharge port, the working fluid in the rear space S is discharged to the sixth port P6 and the eighth port P8 through the notched grooves 60c and 30b. Accordingly, the pressure in the rear space S can be reduced.

At this time, the communication ports A1 to A4 and B1 to B4 do not communicate with the outlet ports, that is, the first port P1, the third port P3, the sixth port P6, and the eighth port P8.

Accordingly, when the upper rotor 50 and the lower rotor 60 are at each rotation position or when they move between the rotation positions, the original function of the switching valve 1 is not influenced, for example, by a shortage in the flow rate of the working fluid to be derived.

Similarly, although not illustrated in the drawings, the notched groove 60c of the lower rotor 60 and the notched groove 30b of the stator 30 communicate with each other between the second rotation position and the third rotation position and between the third rotation position and the fourth rotation position.

As described above, since the notched groove 60c of the lower rotor 60 communicates with the sixth port P6 and the eighth port P8 as the outlet ports without being influenced by the pressure in the rear space S between the rotation positions of the upper rotor 50 and the lower rotor 60, the upper rotor 50 and the lower rotor 60 can be rotated.

Further, since the pressure in the rear space S is maintained without decreasing at each rotation position of the upper rotor 50 and the lower rotor 60, the force due to the pressure of the fluid in the rear space S is applied to the upper rotor 50 and the lower rotor 60 together with the biasing force of the spring **4.** Accordingly, the upper surface 50e of the upper rotor 50 is reliably pressed against the lower surface 20c of the bottom portion 20A of the casing 20, and the lower surface 60e of the lower rotor 60 is reliably pressed against the upper surface 30c of the stator 30.

Further, since the notched groove 60c of the lower rotor 60 communicates with the sixth port P6 and the eighth port P8 at a midway position between the rotation positions, the time from pressure release in the rear space S to the next rotation position is made uniform, and wear between the upper surface 50e of the upper rotor 50 and the lower surface 20c of the casing 20 and between the lower surface 60e of the lower rotor 60 and the upper surface 30c of the stator 30 can be suppressed.

Further, since the working fluid in the rear space S is discharged to the sixth port P6 and the eighth port P8, the discharge port for discharging the working fluid in the rear space S may not be provided separately and the structure of the switching valve V can be simplified.

Further, the notched groove 60c is adapted to communicate the outer diameter side with the side of the upper surface 30c of the stator 30. In this way, the notched groove 60c can be configured simply.

Further, the housing 10 is provided with the notched groove 30b which allows the sixth port P6 and the eighth port P8 to communicate with the lower surface 60e of the lower rotor 60. Accordingly, since the notched groove 60c of the lower rotor 60 communicates with the sixth port P6 and the eighth port P8 through the notched groove 30b of the stator 30 to protrude outward from the sixth port P6 and the eighth port P8, the notched groove 60c can be prevented from communicating with the fifth port P5 and the seventh port P7.

Further, the notched groove 60c of the lower rotor 60 does not communicate with the notched groove 30b of the stator 30 at each rotation position of the upper rotor 50 and the lower rotor 60. Accordingly, since the surface pressure between the upper surface 50e of the upper rotor 50 and the lower surface 20c of the casing 20 and the surface pressure between the lower surface 60e of the lower rotor 60 and the upper surface 30c of the stator 30 are ensured at each rotation position, the working fluid is prevented from leaking from the inlet port into the space in the housing 10. Thus, the original function of the switching valve 1 is not influenced, for example, by a shortage in the flow rate of the working fluid to be derived to the outlet port.

For the notched groove 60c of the lower rotor 60, when the communication ports A1 to A4 and B1 to B4 communicate with the sixth port P6 and the eighth port P8, the notched groove 60c of the lower rotor 60 and the notched groove 30b of the stator 30 do not communicate with each other. Accordingly, since the working fluid of the rear space S is not discharged to the sixth port P6 and the eighth port P8 in the communication state with the sixth port P6 and the eighth port P8, fluctuations in the flow rate of the working fluid to the sixth port P6 and the eighth port P8 can be suppressed, and the original function of the switching valve 1 is not influenced.

Further, the housing 10 has the lower surface 20c of the casing 20 and the upper surface 30c of the stator 30 provided therein and has the upper rotor 50 and the lower rotor 60 provided as a pair to rotate integrally, and the rear space S is formed between the upper rotor 50 and the lower rotor 60. Accordingly, the surface pressure between the upper surface 50e of the upper rotor 50 and the lower surface 20c of the casing 20 and the surface pressure between the lower surface 60e of the lower rotor 60 and the upper surface 30c of the stator 30 can be ensured by the pressure in the rear space S, and the pressure in the rear space S can be controlled by the notched groove 60c of the lower rotor 60.

Furthermore, in the first embodiment, although a case has been exemplified in which two notched grooves 30b are provided, the number of the notched grooves 30b can be freely changed. For example, the notched groove 30b may be provided in at least one of the outlet ports provided on the side of the stator 30. Further, the discharge port may be provided in the casing 20, and in this case, the discharge means may be provided in the upper rotor 50.

Further, the configuration of the notched groove 30b may be omitted if the notched groove 60c of the lower rotor 60 can communicate with the sixth port P6 and the eighth port P8 as the outlet ports while moving between the rotation positions. For example, the outlet port may simply have a larger diameter than the inlet port to communicate with the notched groove 60c of the lower rotor 60.

### {Second embodiment}

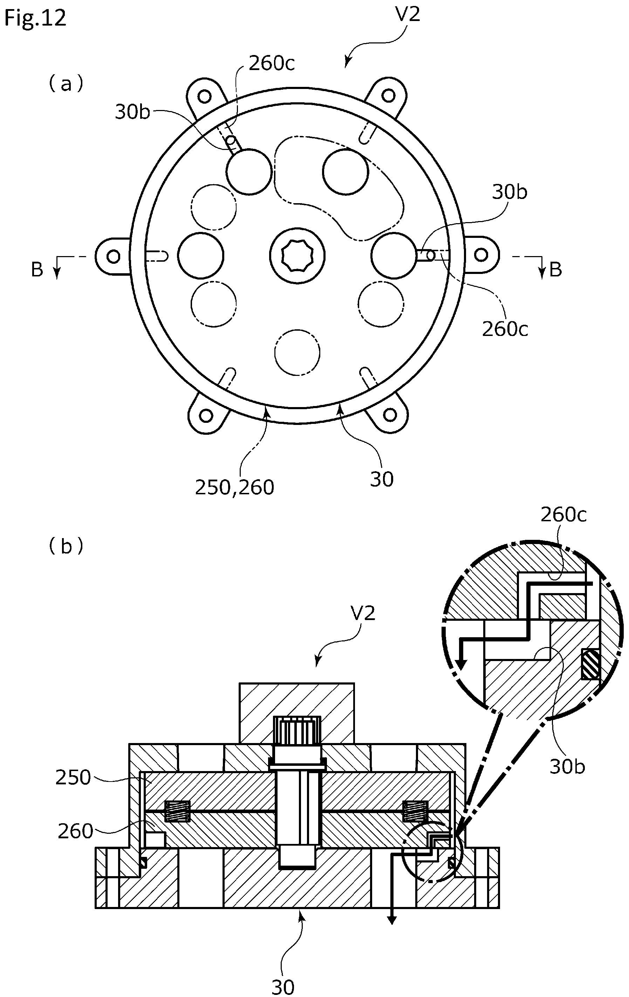

Next, a switching valve according to a second embodiment of the present invention will be described with reference to FIG. 12. Furthermore, the description of the same configuration as that of the first embodiment will be omitted.

As illustrated in FIG. 12A, a switching valve V2 of the second embodiment can reduce the pressure in the rear space S at a midway position when an upper rotor 250 and a lower rotor 260 rotate from a first rotation position to a second rotation position.

As illustrated in FIG. 12B, the lower rotor 260 is provided with a through-hole 260c serving as discharge means penetrating from an outer circumferential surface of the lower rotor 260 toward a lower surface 260e. An opening of the through-hole 260c on the side of the lower surface 260e is adapted to communicate with the notched groove 30b of the stator 30 at a midway position when rotating from the first rotation position to the second rotation position.

### {Third embodiment}

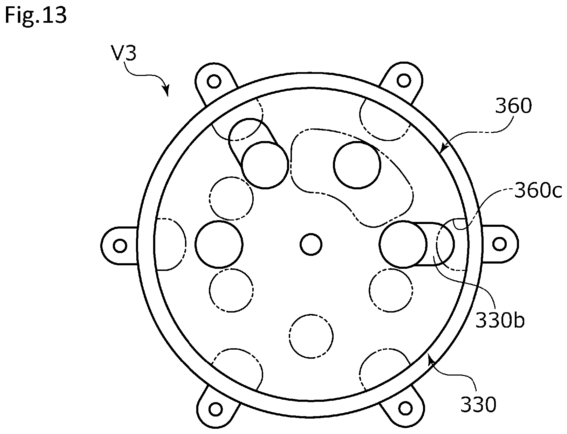

Next, a switching valve according to a third embodiment of the present invention will be described with reference to FIG. 13. Furthermore, the description of the same configuration as that of the first embodiment will be omitted.

As illustrated in FIG. 13, in a switching valve V3 of the third embodiment, a notched groove 330b of a stator 330 and a notched groove 360c of a lower rotor 360 have a larger circumferential width than the notched groove 30b of the stator 30 and the notched groove 60c of the lower rotor 60 of the first embodiment.

Accordingly, the pressure in the rear space S (see FIG. 2) can be reduced over a wide range between each rotation position. In this way, the width of the notched groove of the rotor or the width of the notched groove of the stator can be freely changed.

### {Fourth embodiment}

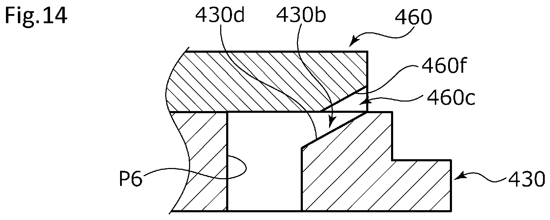

Next, a switching valve according to a fourth embodiment of the present invention will be described with reference to FIG. 14. Furthermore, the description of the same configuration as that of the first embodiment will be omitted. Furthermore, for ease of description, FIG. 14 only schematically illustrates a lower rotor 460 and a stator 430.

As illustrated in FIG. 14, a notched groove 460c of the lower rotor 460 of the fourth embodiment has a bottom surface 460f that is inclined to become shallower toward the inner diameter side.

Further, a notched groove 430b of the stator 430 has a bottom surface 430d that is inclined to become shallower radially outward. The bottom surface 430d is substantially parallel to the bottom surface 460f.

Accordingly, since almost no step is formed in the flow path between the rear space S and the sixth port P6, the working fluid in the rear space S can be smoothly guided to the sixth port P6.

Furthermore, the bottom surface 460f or the bottom surface 430d is not limited to a linear planar shape, and may have a curved shape.

### {Fifth embodiment}

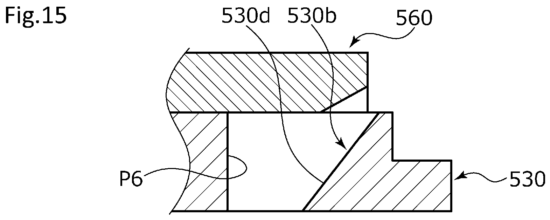

Next, a switching valve according to a fifth embodiment of the present invention will be described with reference to FIG. 15. Furthermore, the description of the same configuration as that of the fourth embodiment will be omitted. Furthermore, for ease of description, FIG. 15 only schematically illustrates a lower rotor 560 and a stator 530.

As illustrated in FIG. 15, a bottom surface 530d of a notched groove 530b of the stator 530 of the fifth embodiment has the inner diameter edge that extends linearly to the lower opening of the sixth port P6.

Accordingly, since the flow path between the rear space S and the sixth port P6 expands toward the sixth port P6, the working fluid in the rear space S can be smoothly guided to the sixth port P6.

### {Sixth embodiment}

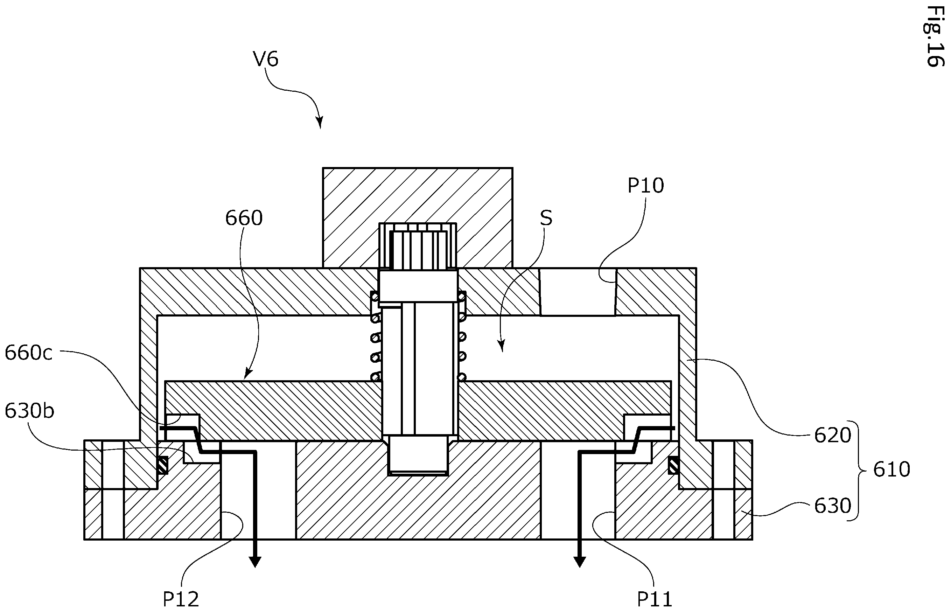

Next, a switching valve according to a sixth embodiment of the present invention will be described with reference to FIG. 16. Furthermore, the description of the same configuration as that of the first embodiment will be omitted.

As illustrated in FIG. 16, a switching valve V6 of the sixth embodiment mainly includes a housing 610 and one rotor 660.

One inlet port P10 is provided in a casing 620 constituting the housing 610.

A plurality of (two in the sixth embodiment) outlet ports P11 and P12 are provided in a stator 630 that constitutes the housing 610. A notched groove 630b that extends radially outward is provided in each of the outlet ports P11 and P12.

The rotor 660 is provided with two notched grooves 660c and one communication port (not illustrated).

The rotor 660 has two rotation positions. When the rotor 660 moves between the rotation positions, each notched groove 660c communicates with each notched groove 630b. Accordingly, the pressure of the rear space S can be reduced.

Further, since the pressure in the rear space S is maintained without decreasing at each rotation position of the rotor 660, the force due to the pressure of the fluid in the rear space S is applied to the rotor 660 together with the biasing force of the spring. Accordingly, the rotor 660 is reliably pressed against the stator 630.

### {Seventh embodiment}

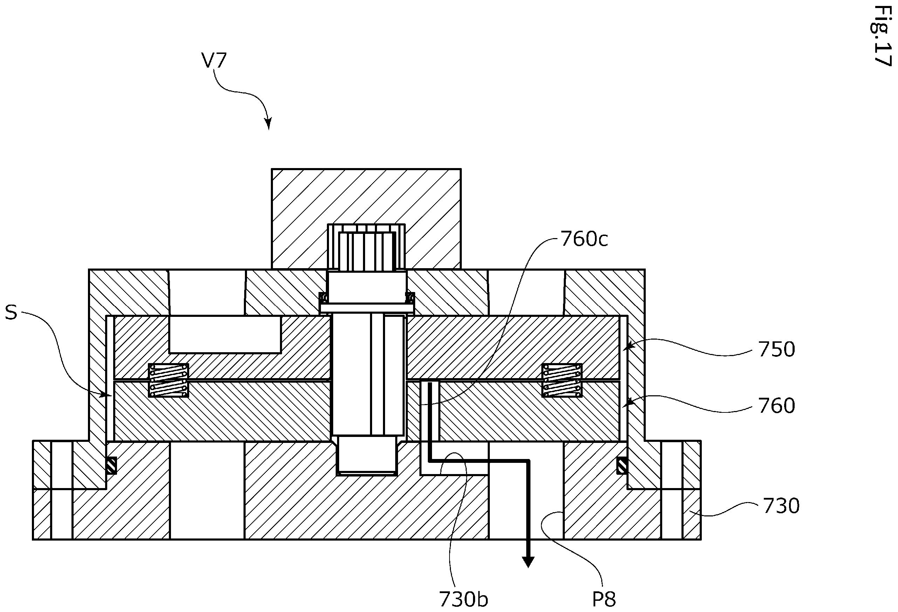

Next, a switching valve according to a seventh embodiment of the present invention will be described with reference to FIG. 17. Furthermore, the description of the same configuration as that of the first embodiment will be omitted.

As illustrated in FIG. 17, in a switching valve V7 of the seventh embodiment, a notched groove 730b extends radially inward from the eighth port P8. The notched groove 730b communicates with the eighth port P8 and opens upward. Furthermore, although not illustrated in the drawings, the notched groove 730b is also provided in the sixth port P6 (see FIG. 4).

A lower rotor 760 is provided with a through-hole 760c serving as discharge means. The through-hole 760c is disposed on the inner diameter side in relation to the eighth port P8.

When the upper rotor 750 and the lower rotor 760 are located at a midway position to the second rotation position rotated approximately 30° counterclockwise from the first rotation position, the through-hole 760c of the lower rotor 760 and the notched groove 730b of the stator 730 overlap each other and communicate with each other.

Accordingly, the working fluid in the rear space S is discharged to the eighth port P8 through the through-hole 760c and the notched groove 730b. Accordingly, the pressure in the rear space S can be reduced.

### {Eighth embodiment}

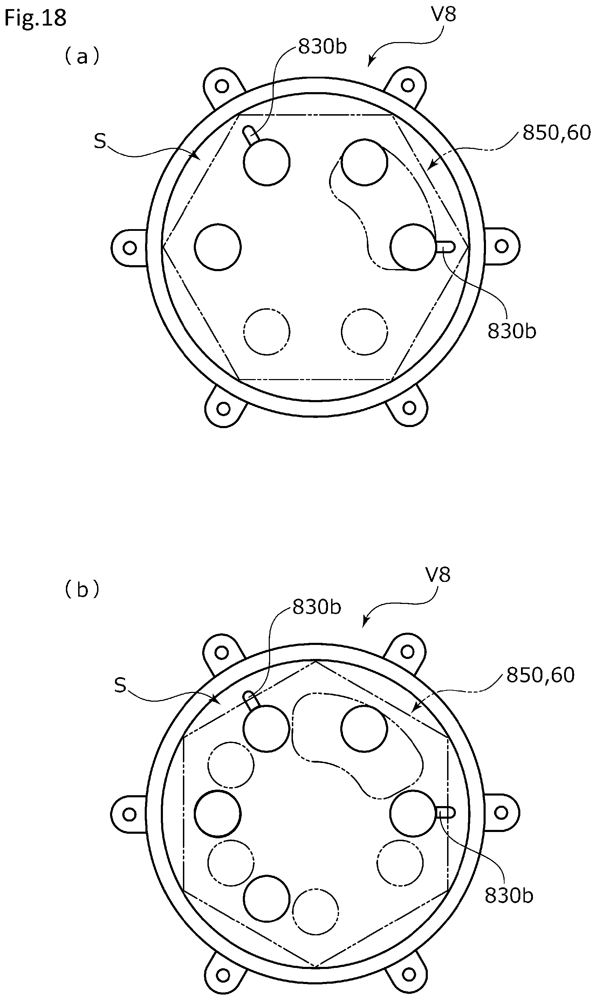

Next, a switching valve according to an eighth embodiment of the present invention will be described with reference to FIG. 18. Furthermore, the description of the same configuration as that of the first embodiment will be omitted.

As illustrated in FIGS. 18A and 18B, an upper rotor 850 and a lower rotor 860 in a switching valve V8 of the eighth embodiment form a regular hexagonal shape when viewed from above.

As illustrated in FIG. 18A, a notched groove 830b serving as discharge means is closed by the lower rotor 860 at the first rotation position of the upper rotor 850 and the lower rotor 860.

As illustrated in FIG. 18B, the notched groove 830b communicates with the rear space S at a midway position when the upper rotor 850 and the lower rotor 860 rotate from a first rotation position to a second rotation position.

As in the eighth embodiment, the pressure in the rear space S can be reduced by providing the notched groove 830b on the housing side even when the discharge means such as a notched groove is not formed in the lower rotor 860.

Furthermore, in the eighth embodiment, although a case has been exemplified in which the upper rotor 850 and the lower rotor 860 have a regular hexagonal shape, they may be freely changed to have other polygonal shapes, a wavy shape with curved sides of a polygon, or a shape with a part of a circle concave in the inner diameter direction.

### {Ninth embodiment}

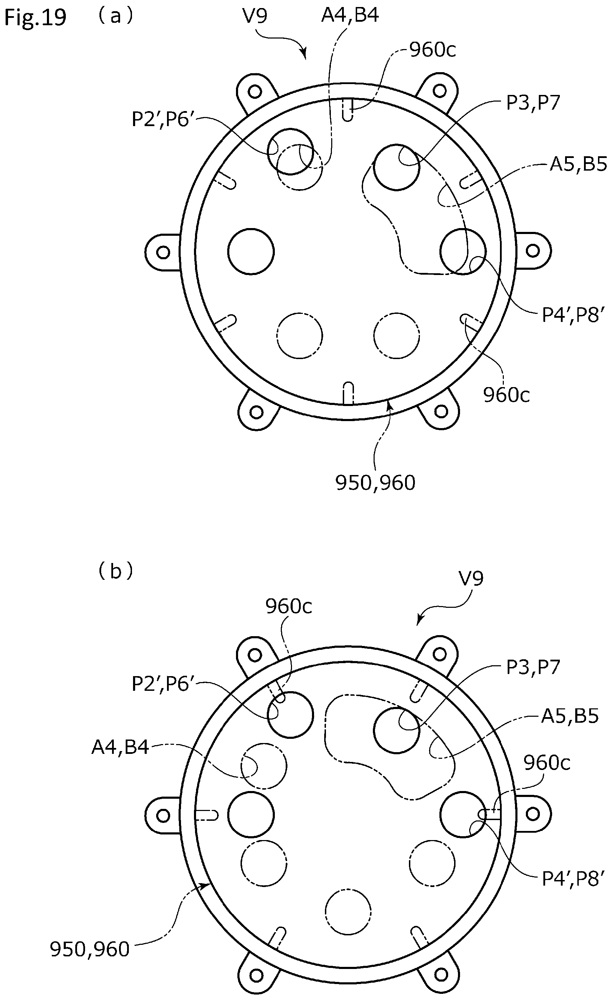

Next, a switching valve according to a ninth embodiment of the present invention will be described with reference to FIG. 19. Furthermore, the description of the same configuration as that of the first embodiment will be omitted.

As illustrated in FIGS. 19A and 19B, in a switching valve V9 of the ninth embodiment, a second port P2', a sixth port P6', a fourth port P4', and an eighth port P8' are provided on the outer diameter side in relation to the second port P2, the sixth port P6, the fourth port P4, and the eighth port P8 of the first embodiment.

As illustrated in FIG. 19A, at the first rotation position of the upper rotor 950 and the lower rotor 960, the second port P2' communicates with the sixth port P6' through the communication ports A4 and B4, the fourth port P4' communicates with the third port P3 through the communication groove A5, and the seventh port P7 communicates with the eighth port P8' through the communication groove B5.

As illustrated in FIG. 19B, at a midway position when the upper rotor 950 and the lower rotor 960 rotate from a first rotation position to a second rotation position, two notched grooves 960c provided in the lower rotor 960 communicate with the sixth port P6' and the eighth port P8'.

As in the ninth embodiment, the pressure in the rear space S can be reduced by two notched grooves 960c provided in the lower rotor 960 even when the discharge means such as a notched groove is not formed on the housing side.

Furthermore, in the ninth embodiment, although a case has been exemplified in which the sixth port P6' and the eighth port P8' are provided on the outer diameter side in relation to the sixth port P6 and the eighth port P8 of the first embodiment, the sixth port P6' and the eighth port P8' may have a larger diameter than the sixth port P6 and the eighth port P8 of the first embodiment. That is, a part of the sixth port P6' and the eighth port P8' may be provided at a position communicating with the discharge means on the rotor side.

Although the embodiments of the present invention have been described above with reference to the drawings, the specific configuration is not limited to these embodiments, and the present invention also includes modifications and additions that do not deviate from the scope of the present invention.

For example, in the first to sixth embodiments, although a case has been exemplified in which the discharge port is the outlet port, a discharge port other than the outlet port or the inlet port may be provided separately in the housing.

Further, in the first to fifth and seventh embodiments, although a case has been exemplified in which the lower rotor is provided with the discharge means, the upper rotor may be provided with the discharge means, and the working fluid may be discharged from the discharge port provided at the upper portion of the housing. Further, the upper rotor and the lower rotor may be provided with the discharge means.

Further, the number of the inlet and outlet ports can be freely changed. Specifically, at least one or more inlet ports or at least two or more outlet ports may be provided. Accordingly, the communication port provided in the rotor can be also freely changed.

Further, the communication port provided in the rotor is not limited to the through-hole, but may be a notch or the like.

Further, in the first embodiment and the third to sixth embodiments, although a case has been exemplified in which the discharge means is the notched groove, the discharge means may be freely modified as in the second embodiment.

Further, in the first to sixth embodiments, although a case has been exemplified in which a guide function unit that guides the working fluid flowing from the discharge means to the outlet port is the notched groove provided in the housing, the present invention is not limited thereto. That is, the shape of the guide function unit may be freely changed if the guide function unit is disposed on the rotation orbit of the discharge means.

Further, in the first to sixth embodiments, although a case has been exemplified in which the discharge means and the discharge port do not communicate with each other when the outlet port and the communication port communicate with each other, they may partially communicate with each other.

Further, in the first to ninth embodiments, although a case has been exemplified in which the rotor is formed in a disk shape, the present invention is not limited thereto. The rotor may have a C shape, a fan shape, or the like, and the shape may be modified as appropriate.

Further, in the first to ninth embodiments, although a configuration has been described in which the rotor is rotationally driven by the motor, the present invention is not limited thereto. That is, the rotor may be driven manually or may be appropriately driven by a drive source other than the motor.

Further, in the first to ninth embodiments, although a case has been exemplified in which the fixed member is the housing including the casing and the stator, the fixed member may include a member other than the casing and the stator. For example, a member provided with the outlet port and the seat surface may be fixed to the casing or the stator.

### {REFERENCE SIGNS LIST}

- 4: Spring
- 10: Housing (fixed member)
- 20: Casing
- 20c: Lower surface (seat surface)
- 30: Stator
- 30b: Notched groove (discharge port)
- 30c: Upper surface (seat surface)
- 50: Upper rotor
- 50e: Upper surface (contact surface)
- 60: Lower rotor
- 60c: Notched groove (discharge means)
- 60d: Annular groove
- 60e: Lower surface (contact surface)
- A1 to A4: Communication port
- A5: Communication groove (communication port)
- B1 to B4: Communication port
- B5: Communication groove (communication port)
- P1: First port (outlet port)
- P2: Second port (inlet port)
- P3: Third port (outlet port)
- P4: Fourth port (inlet port)
- P5: Fifth port (inlet port)
- P6: Sixth port (outlet port)
- P7: Seventh port (inlet port)
- P8: Eighth port (outlet port)
- S: Rear space
- T: Valve chamber
- V: Switching valve

## Claims

1. A switching valve, comprising:
a housing; and
a rotor which is disposed in a valve chamber formed inside the housing and rotates relative to the housing,
wherein the housing is provided with at least one inlet port which communicates with the valve chamber and introduces a fluid into the valve chamber and at least two outlet ports which communicate with the valve chamber and derive the fluid from the valve chamber,
wherein the rotor has a contact surface which contacts a seat surface of the housing and has at least one communication port which connects the inlet port and the outlet ports,
the rotor rotates to take a plurality of rotation positions and a flow path is switched by combining the inlet port, the outlet ports and the communication port at each rotation position, and
the rotor is provided with discharge means for discharging a fluid in the valve chamber to outside of the valve chamber between the rotation positions.

2. The switching valve according to claim 1,
wherein the discharge means communicates with the outlet ports.

3. The switching valve according to claim 1,
wherein the discharge means is a notched groove which allows an outer diameter side of the rotor to communicate with a seat surface side.

4. The switching valve according to claim 3,
wherein the housing is provided with a notched groove which extends radially outward from the outlet port and communicates with the notched groove of the rotor.

5. The switching valve according to claim 3,
wherein the housing is provided with a communication hole which extends radially outward from the outlet port and communicates with the notched groove of the rotor.

6. The switching valve according to claim 1,
wherein the discharge means is a through-hole which penetrates the rotor in an axial direction.

7. The switching valve according to any one of claims 1 to 6,
wherein the discharge means does not communicate with the outlet port at each rotation position of the rotor.

8. The switching valve according to claim 1,
wherein a pair of the rotors are arranged in the valve chamber to rotate integrally, and
wherein at least one of the rotors is provided with the discharge means.

9. A switching valve, comprising:
a housing; and
a rotor which is disposed in a valve chamber formed inside the housing and rotates relative to the housing,
wherein the housing is provided with at least one inlet port which communicates with the valve chamber and introduces a fluid into the valve chamber and at least two outlet ports which communicate with the valve chamber and derive the fluid from the valve chamber,
wherein the rotor has a contact surface which contacts a seat surface of the housing and has at least one communication port which connects the inlet port and the outlet ports,
the rotor rotates to take a plurality of rotation positions and a flow path is switched by combining the inlet port, the outlet ports and the communication port at each rotation position, and
the housing is provided with discharge means for discharging a fluid in the valve chamber to outside of the valve chamber between the rotation positions.
